# EUROPÄISCHE PATENTSCHRIFT

(11) **EP 0 691 514 B1**
(45) Veröffentlichungstag und Bekanntmachung des Hinweises auf die Patenterteilung: **21.04.1999**
(21) Anmeldenummer: 95108466.4
(22) Anmeldetag: 02.06.1995
(51) Int. Cl.: F24D 10/00

(54) **Wärmeübergabestation**
District heating distribution station
Sous-station pour chauffage urbain

(30) Priorität: 06.07.1994 DE 4423660
(43) Veröffentlichungstag der Anmeldung: 10.01.1996
(73) Patentinhaber: Helmut Bälz GmbH, D-74076 Heilbronn (DE)
(72) Erfinder:
(74) Vertreter: Rüger, Rudolf, Dr.-Ing.

(56) Entgegenhaltungen:
- WO-A-88/09904
- WO-A-89/09368
- DE-A- 4 320 395

## Beschreibung

Bei Ferndampfsystemen und ähnlichen Dampfheizungssystemen sind häufig Wärmeverbraucher vorgesehen, die nicht direkt mit Dampf sondern mit einem anderen Wärmeträgermedium, wie z.B. Warmwasser beheizt werden. Dieses wird in einem eigenen Kreislauf geführt und in einer Wärmeübergabestation von dem dabei kondensierenden Dampf erwärmt. Die Wärmeübergabestation ist somit die Schnittstelle zwischen dem Dampf/Kondensat-Netz und dem Warmwassernetz.

In einem ausgedehnten Ferndampfsystem sind dabei mehrere, häufig sehr viele Wärmeübergabestationen vorhanden, über die jeweils eine Gruppe von Wärmeverbrauchern bedient wird. Der Wärmeübergabestation als Schnittstelle zwischen dem Dampf- und dem anderen Wärmeträgernetz kommt dabei für die gute Energieausnutzung des Gesamtsystems und für die Betriebssicherheit desselben eine Schlüsselstellung zu. Beispielsweise kann es wegen der hohen in dem Dampf enthaltenen Enthalpie leicht zu Übertemperaturen an der Wärmeübergabestation kommen. Übertemperaturen führen zu Energieverlusten und damit zu einer verschlechterten Energieausnutzung. Außerdem können Schäden an der Wärmeübergabestation entstehen. Es ist deshalb erforderlich, den Betrieb der Wärmeübergabestation möglichst genau zu überwachen und den Energieumsatz entsprechend zu steuern bzw. zu regeln.

Beim Aufbau eines solchen Fernwärmesystems wird im allgemeinen in mehrerer Hinsicht schrittweise vorgegangen:

Häufig werden das Dampf- und das Warmwassersystem sowie weitere Baugruppen zeitlich nacheinander installiert. Das ist insbesondere bei Rekonstruktionen der Fall, bei denen beispielweise bislang lokal ölbeheizte Warmwasseranlagen an das Fernwärmesystem angeschlossen werden, wobei der Warmwasserkreis weitgehend unverändert bleibt. Auch der umgekehrte Fall ist möglich, bei dem an das bereits bestehende Fernwärmesystem ein zusätzlicher Abnehmer und damit ein zusätzlicher Warmwasserkreis angeschlossen werden soll.

Außerdem werden sowohl der Warmwasserkreis als auch das Fernwärmesystem an der betreffenden Baustelle vor Ort nach und nach errichtet, indem zunächst die Rohrleitungen und die Armaturen verlegt werden, diese dann gegebenenfalls mit Meß- und Überwachungseinrichtungen versehen werden und schließlich eine Wärmeisolierung vorgesehen wird.

Außerdem werden bislang Wärmeübergabestationen am Aufstellort weitgehend handwerklich errichtet, wobei die erforderlichen Arbeiten nacheinander von Handwerkern verschiedener Gewerke ausgeführt werden. Zunächst werden einzelne Bausteine, wie beispielsweise ein Wärmetauscher, Meßeinrichtungen für das Kondensat, Pumpen, Armaturen, Meßeinrichtungen für das Heizmedium und dergleichen von einem Apparatebauer geliefert. Die Bausteine werden vor Ort von einem Heizungsbauer aufgestellt, der sie meist mittels eines Rohrgestells in ihrer gewünschten räumlichen Lage anbringt und danach die erforderlichen Rohrleitungsverbindungen herstellt. Nach Beendigung dieser Arbeiten installiert ein Elektriker die Meß- und Regeltechnik, die einzelne Druck- und/oder Temperatursensoren sowie Pumpen und Stellmotoren umfaßt, die vormontiert von einem entsprechenden Lieferanten kommen. Schließlich wird an der soweit prinzipiell betriebsfertig aufgestellten Anlage von einem Isolierer eine Wärmeisolierung angebracht.

Um die Sensoren und anderweitigen elektrischen Aggregate an der Wärmeübergabestation montieren zu können, benötigt der Elektriker Zugang auch zu sonst relativ versteckt liegenden Stellen. Der Heizungsbauer muß bei seiner Installation darauf Rücksicht nehmen, wodurch die Wärmeübergabestation relativ groß wird. Auch für die im letzten Schritt anzubringende Isolierung und deren Montage an der Wärmeübergabestation muß Freiraum vorgesehen werden. Dem muß schon beim Aufbau der Anlage durch den Heizungsbauer Rechnung getragen werden.

Diese Vorgehensweise beim Aufbau von Wärmeübergabestationen ist außerdem fehlerträchtig. Die verschiedenen Gewerke müssen, wie oben dargestellt, beim Aufbau der Wärmeübergabestation aufeinander Rücksicht nehmen. Jedoch ist dies wegen der fehlenden gegenseitigen Kenntnis der Einzelgewerke voneinander nur sehr eingeschränkt möglich.

Bei der geschilderten Vorgehensweise kann es außerdem vorkommen, daß Sensoren zur Überwachung des Betriebs der Wärmeübergabestation nicht an der zur Meßwerterfassung optimalen Stelle untergebracht werden, sondern an einer anderen Stelle, die beispielsweise besser zugänglich oder durch den technologischen Aufbau der Wärmeübergabestation bedingt ist. So wird beispielsweise das entstehende Kondensat in den gesonderten Kondensatableiter geleitet, an dem die Meßkammer mit mehreren Sensoren vorgesehen ist. Aus den in der Meßkammer ermittelten Daten können jedoch nur indirekt Rückschlüsse auf den Betrieb der Wärmeübergabestation gezogen werden.

Außerdem ist der Zugang zu den einzelnen Komponenten durch das die Bausteine tragende Rohrgerüst erschwert. Überdies ergibt sich ein hoher Raumbedarf, d.h. ein hohes Bauvolumen für die Wärmeübergabestation sowie ein hoher Materialaufwand.

Aus der WO 88/09904 ist ein Verfahren zum Herstellen einer Wärmeübergabestation bekannt, bei dem die Wärmeübergabestation gesondert vormontiert wird und als vormontierte Kompakteinheit an den Aufstellort transportiert und in das zu errichtende Dampfwärmesystem eingebaut wird. Die vormontierte Einheit wird beim Aufbau an einem gesonderten Ort mit einem für den Betrieb erforderlichen Komponenten versehen.

Davon ausgehend ist es Aufgabe der Erfindung, eine Wärmeübergabestation zu schaffen, die sich durch geringen Raumbedarf, hohe Betriebssicherheit und Materialersparnis auszeichnet.

Diese Aufgabe wird durch eine Wärmeübergabestation mit den Merkmalen des Patentanspruchs 1 gelöst.

Der Wärmetauscher als zentrales Bauelement der Wärmeübergabestation ist direkt auf der Kondensatkammer gesockelt. Die Kondensatkammer und der Wärmetauscher bilden somit eine feste säulenartige Einheit, die ohne weiteres Gestell direkt am Aufstellort verankert ist. Der Aufstellort kann dabei beispielsweise eine Grundplatte sein. Die Kondensatkammer mit dem fest darauf sitzenden Wärmetauscher bildet somit in der Art eines großen aufrechtstehenden Rohres eine tragende Säule, an der alle weiteren Baugruppen und Komponenten der Wärmeübergabestation befestigt sind. Ein Gerüst ist überflüssig.Auch wird Material eingespart. Es sind erheblich weniger Rohre, Flansche, Schrauben, Muttern usw. erforderlich.

Dieser Grundaufbau ermöglicht ist, die Wärmeübergabestation schon beim Apparatehersteller weitgehend fertigzustellen. Dabei ist die Wärmeübergabestation in ihren aufeinanderfolgenden Aufbaustadien mittels der an der Fertigungsstätte vorhandenen Hilfsmittel soweit handhabbar, daß Meßeinrichtungen und Sensoren auch an ansonsten schlecht oder nicht zugänglichen Stellen angebracht werden können. Die Sensoren können damit an den Stellen vorgesehen werden, die für die Meßwerterfassung optimal sind, so daß die Wärmeübergabestation im Ergebnis eine höhere Betriebssicherheit aufweist.

Während bei dem herkömmlichen Aufbau die einzelnen Bausteine, wie Wärmetauscher, Kondensatkammern, Meßkammern usw., von dem Apparatehersteller als in sich abgeschlossene Standardgeräte geliefert werden mußten, kann dieser nun die Wärmeübergabestation als integrierte Einheit liefern. Dadurch wird es möglich, die Bausteine als Komponenten der Wärmeübergabestation sowohl hinsichtlich ihrer räumlichen Anordnung als auch hinsichtlich ihrer Gestaltung so auszubilden, daß die Wärmeübergabestation optimiert arbeitet. Beispielsweise kann die Kondensatkammer mit ihren Sensoren als bauliche Einheit mit dem Wärmetauscher ohne Zwischenschaltung irgendwelcher Rohrleitungen den Zustand des Kondensats direkt nach dem Entstehungsort erfassen, sobald das Kondensat aus dem Wärmetauscher austritt, noch bevor es verfälscht werden kann. Eine Meßwertverfälschung durch Auskühlen oder Druckveränderungen des Kondensats ist weitgehend ausgeschlossen. Damit werden der richtige Druck, die richtige Temperatur und die richtige Leitfähigkeit gemessen. Dies ist insbesondere wichtig, wenn der Kondensatdurchsatz gering ist, also im Teillastbereich.

Entsprechendes gilt für eine Meßkammer zur Erfassung wenigstens der Temperatur des in dem Wärmetauscher erwärmten Heizmediums. Diese kann direkt an dem Wärmetauscher angeordnet werden. Dadurch werden Störungen oder Fehlsteuerungen unmittelbar erfaßt und eine Regeleinrichtung kann sofort entsprechend reagieren, noch bevor Übertemperaturen auftreten. Die Anordnung der Meßkammer direkt an dem Wärmetauscher ergibt eine wesentlich verkürzte Ansprechzeit, so daß reagiert werden kann, noch bevor Sicherheitsventile ansprechen oder Heizvorgänge aus Sicherheitsgründen abgebrochen werden müssen. Damit werden Überhitzungen, Energieverluste und Beschädigungen wirksam vermieden.

Der Apparatehersteller kann bei diesem Aufbau der Wärmeübergabestation dieselbe komplett nach wärme- und regelungstechnischen Gesichtspunkten vormontieren, wobei er die optimale räumliche Anordnung der einzelnen Bausteine und gegebenenfalls deren Integration realisieren und dadurch eine wesentliche verbesserte Funktion erreichen kann.

Außerdem kann die Wärmeübergabestation sehr kompakt hergestellt werden. Während herkömmlicherweise jeder Handwerker für den jeweils nachfolgenden ausreichend Platz lassen mußte, kann nun die rundherum zugängliche Wärmeübergabestation industriell kompakt vormontiert und als Baugruppe an den Aufstellort gebracht werden.

Weil der Wärmetauscher direkt auf der Kondensatkammer gesockelt ist, ist ein Traggestell überflüssig. Neben den verringerten Gesamtabmessungen, insbesondere der verringerten Bauhöhe ist somit auch die Zugänglichkeit der einzelnen Komponenten der Wärmeübergabestation verbessert.

Der Wärmetauscher und die Kondensatkammer übernehmen eine Doppelfunktion. Neben ihrer eigentlichen wärmetechnischen Funktion sind sie ein zentrales Trägerteil der Wärmeübergabestation, an dem Leitungsanschlüsse, Armaturen und Meßeinrichtungen der Wärmeübergabestation befestigt sind. Dabei ergibt sich eine hohe mechanische Stabilität, wenn sowohl der Wärmetauscher als auch die Kondensatkammer jeweils die Form eines aufrechtstehenden Zylinders aufweisen.

Eine starre Verbindung zwischen dem Wärmetauscher und der Kondensatkammer, die durch eine Verschraubung oder auch eine entsprechende Verschweißung hergestellt sein kann, läßt die so gebildete Einheit zu einem besonders kompakten Träger werden. Dabei ist es vorteilhaft, wenn der Durchmesser der Kondensatkammer im wesentlichen mit dem Durchmesser des Wärmetauschers übereinstimmt. Die Kondensatkammer ist dann zugleich der Fuß des Wärmetauschers.

An der Wärmeübergabestation kann an der zu der Oberseite des Wärmetauschers führenden Dampfzuleitung ein Absperrschieber vormontiert sein. Dies spart ebenfalls Montagekosten und Zeit am Aufstellort.

Von der Kondensatkammer führt eine freitragende Kondensatleitung weg, in der wenigstens ein von der Leitung gehaltener Absperrschieber vorgesehen sein kann. Zur automatischen Steuerung bzw. Regelung der Wärmeübergabestation kann einer der Absperrschieber mit einem Stellmotor ausgerüstet sein, der ebenfalls vormontiert ist.

Die Montage der Wärmeübergabestation vor Ort wird erheblich erleichtert, wenn der Wärmetauscher bereits mit einer in der Vorlaufleitung liegenden Meßkammer für den erwärmten Wärmeträger ausgerüstet ist, die ebenfalls von dem Wärmetauscher getragen ist. Die Meßkammer weist dabei wenigstens eine Absperrarmatur, Sensoren sowie Meß- und Überwachungseinrichtungen auf.

Ebenfalls kann bereits an der vormontierten Wärmeübergabestation eine in der Rücklaufleitung des Wärmetauschers liegende elektrische Pumpe vorgesehen sein, die von der Rücklaufleitung und somit letztendlich von dem Wärmetauscher getragen ist.

Der soweit alle wesentliche Bausteine tragende Wärmetauscher und die mit diesem fest verbundene Kondensatkammer können auf einer als Aufstellort dienenden transportablen Grundplatte montiert sein. Dies ist vorteilhafterweise eine im wesentlichen ebene rechteckige Platte, die bei ihren längeren Kanten nach unten abgewinkelt ist. Die abgewinkelten Kanten verleihen der Grundplatte eine ausreichende Steifigkeit. Außerdem halten sie die Grundplatte in einigem Abstand von dem Fußboden, so daß die vormontierte Wärmeübergabestation leicht, beispielsweise von einem Hubwagen, Gabelstapler oder einem ähnlichen Transportmittel aufgenommen und transportiert werden kann.

An der vormontierten Wärmeübergabestation kann eine Steuer- und Überwachungseinrichtung vorgesehen sein, die mit den entsprechenden Sensoren und Aktuatoren, wie Stellmotoren und dergleichen, elektrisch verbunden ist. Dadurch wird es möglich, daß die Funktionskontrolle von dem Apparatehersteller übernommen werden kann, der die Wärmeübergabestation vormontiert. Spätere Fehlschaltungen auf der Baustelle werden somit zuverlässig vermieden.

Wenn die vormontierte Wärmeübergabestation alle zur Funktion erforderlichen Komponenten soweit enthält, daß die Baugruppe bei Anschluß der erforderlichen Medien Dampfwärmeträger und Elektroenergie funktionsfähig ist, kann die Wärmeübergabestation als vormontierter Baustein auf besonders einfache Weise am Aufstellort in das dort bestehende System eingefügt werden. Es sind lediglich die äußeren Anschlüsse herzustellen, ohne daß Eingriffe an der Wärmeübergabestation selbst erforderlich wären.

In der Zeichnung ist ein Ausführungsbeispiel der Erfindung dargestellt. Es zeigen:
Fig. 1 ein Fernwärmesystem mit einer Wärmeübergabestation und mehreren Wärmeverbrauchern in stark schematisierter und ausschnittsweiser Darstellung und
Fig. 2 die Wärmeübergabestation nach Fig. 1 als kompakte vormontierte Baugruppe.

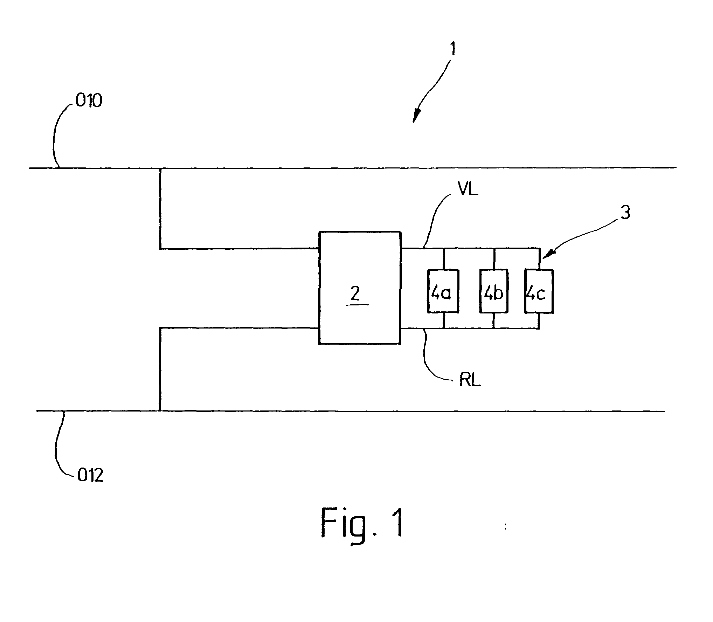

In Fig. 1 ist im Ausschnitt ein Fernwärmesystem 1 dargestellt, bei dem eine Dampfleitung 010 von einem nicht weiter dargestellten Dampferzeuger erhitzten und unter Druck stehenden Dampf an mehrere Wärmeübergabestationen 2 heranführt, von denen in Fig. 1 lediglich eine dargestellt ist. Die Wärmeübergabestation 2 ist ausgangsseitig an eine Kondensatrückführungsleitung 012 angeschlossen, die das von den mehreren Wärmeübergabestationen 2 gelieferte Kondensat sammelt und an den Dampferzeuger zurückführt.

Die Wärmeübergabestation 2 dient als Wärmequelle für einen Wärmeträgerkreis 3, in dem Wasser als Wärmeübertragerflüssigkeit zirkuliert. Das Wasser wird über eine Vorlaufleitung VL von der Wärmeübergabestation 2 an Wärmeverbraucher 4 herangeführt, wobei in Fig. 1 lediglich beispielhaft drei Wärmeverbraucher 4a, 4b, 4c dargestellt sind. Ausgangsseitig sind die Wärmeverbraucher 4 über eine Rücklaufleitung RL mit der Wärmeübergabestation 2 verbunden.

Bei dem insoweit dargestellten Fernwärmesystem 1 wird der durch die Dampfleitung 010 herangeführte Dampf in der Wärmeübergabestation 2 entsprechend dem Energiebedarf der Wärmeverbraucher 4a, 4b, 4c kondensiert, wobei das entstehende Kondensat über die Kondensatrückführungsleitung 012 zurückfließt. Dabei wird das in dem Wärmeträgerkreis 3 umlaufende Wasser erwärmt und über die Vorlaufleitung VL an die Wärmeverbraucher 4 geliefert, die es abkühlen und über die Rücklaufleitung RL an die Wärmeübergabestation 2 zurückgeben.

Wesentliche, zur Steuerung des Betriebs des jeweiligen Wärmeträgerkreises 3 erforderliche Meß- und Regeleinrichtungen sind vor allem in der Wärmeübergabestation 2 konzentriert. Hier finden sich Sensoren zur Druck- und Temperaturüberwachung, die mit einer Steuer- und Regeleinrichtung verbunden sind. Nur die ordnungsgemäße Funktion dieser Steuer- und Regeleinrichtung und korrekte, von den Sensoren gelieferte Daten stellen sicher, daß die Steuerund Regeleinrichtung den wirklichen Systemzustand erfaßt und die Wärmeübergabestation 2 so steuert, daß dem Fernwärmesystem nur so viel Wärmeenergie entnommen wird, wie in dem Wärmeträgerkreis erforderlich ist. Die sachgerechte Montage der Wärmeübergabestation 2 und der Sensoren sind dabei von ausschlaggebender Bedeutung für die Betriebssicherheit und die Güte hinsichtlich der wirtschaftlichen Energieausnutzung.

Die Wärmeübergabestation 2 ist funktionsfertig vormontiert.

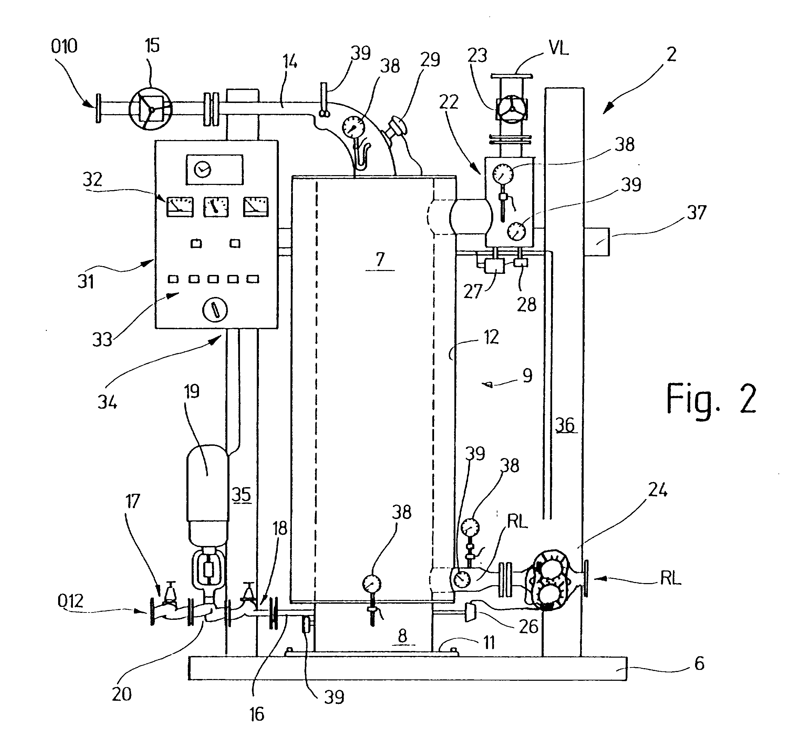

In Fig. 2 ist die Wärmeübergabestation 2 gesondert dargestellt, die die Schnittstelle zwischen dem von der Dampfleitung 010, dem Dampferzeuger und der Kondensatrückführungsleitung gebildeten Dampfnetz und dem Wärmeträgerkreis 3 bildet. Die Wärmeübergabestation 2 ist eine kompakte vorgefertigte Baugruppe, die auf einer im Grundriß rechteckigen Grundplatte 6 verankert ist. Etwa mittig ist auf der Grundplatte 6 eine aus einem zylindrischen Wärmetauscher 7 und einer ebenfalls zylindrischen Kondensatkammer 8 bestehende Säule 9 angeordnet, die als integrierte Einheit das tragende Element der Wärmeübergabestation 2 bildet. Der aufrechtstehende Wärmetauscher 7 stimmt in seinem Durchmesser mit der Kondensatkammer 8 überein und ist mit dieser fest verbunden. Die unterhalb des Wärmetauschers 7 an diesem angeordnete Kondensatkammer 8 weist an ihrer der Grundplatte 6 zugewandten Stirnseite einen rechteckigen Flansch 11 auf, der mit der Grundplatte fest verschraubt ist. Die Kondensatkammer 8 stützt dabei das Gewicht des Wärmetauschers 7 auf der Grundplatte 6 ab.

Der bei seiner Mantelfläche mit einer Isolierung 12 umgebene Wärmetauscher 7 ist an seiner Oberseite 13 mit einem der Dampfzuführung dienenden Rohrkrümmer 14 versehen, an den ein Handabsperrventil 15 angeflanscht ist. Der Rohrkrümmer weist in Verlängerung des Handabsperrventils einen geraden Abschnitt auf, der ein Gefälle von 2,5% aufweist. Im Anschluß an diesen Bereich erweitert sich der Rohrkrümmer zu einem größeren Durchmesser und führt mit einer Biegung in den Wärmetauscher 7. Das Gefälle kann bei der vormontierten Wärmeübergabestation 2 gut eingehalten werden. Es bewirkt, daß beim Wiederanfahren einer Wärmeübergabestation 2 mit geflutetem Rohrkrümmer 14 Kondensatschläge vermieden werden, die ansonsten zu Schäden führen können. Die Erweiterung des Rohrkrümmers 14 zu einem größeren Durchmesser dient der Dampfausdehnung und -beruhigung.

Ausgangsseitig und zum Anschluß an die Kondensatrückführungsleitung 012 ist an der Kondensatkammer 8 eine Kondensatausgangsleitung 16 vorgesehen, in der zwischen zwei Handabsperrventilen 17, 18 ein über einen Elektromotor 19 betätigter Absperrschieber 20 angeordnet ist. Die Kondensatausgangsleitung 16 hält dabei die Handabsperrventile 17, 18 und den Elektromotor 19 mit dem Absperrschieber 20, wobei das Gewicht von der Kondensatkammer 8 aufgenommen und auf der Grundplatte 6 abgestützt wird.

Von dem Wärmetauscher 7 ist eine in der Vorlaufleitung VL liegende Meßkammer 22 gehalten, die ausgangsseitig ein Handabsperrventil 23 trägt. Die Vorlaufleitung VL ist dabei in einem oberen Bereich an den Wärmetauscher 7 angeschlossen. Vertikal unterhalb der Vorlaufleitung VL ist an dem Wärmetauscher 7 nahe bei der Kondensatkammer 8 die Rücklaufleitung RL angeschlossen, in der eine sich über diese an dem Wärmetauscher 7 abstützende elektrische Zwillingspumpe 24 vorgesehen ist.

Sowohl die Kondensatkammer 8, die Meßkammer 22 als auch der Rohrkrümmer 14 sind mit elektrischen Sensoren 26, 27, 28, 29 bestückt, die über entsprechende Leitungen mit einer elektrischen Steuereinheit 31 verbunden sind. Der Sensor 26 erfaßt mehrere den Zustand des Kondensats kennzeichnende Werte, wie Temperatur, Druck und gegebenenfalls Leitfähigkeit. Auch der an dem Rohrkrümmer 14 vorgesehene Sensor 29 kann mehrere Werte, wie Druck und Temperatur, erfassen oder bspw. als Trennschichtsensor ausgebildet sein, der die Trennschicht zwischen Dampf und Kondensat auf de Basis der erfaßten Leitfähigkeit ermittelt. Die an der Meßkammer 22 angeordneten Sensoren 27, 28 dienen der Bestimmung des Zustandes des Heizmediums und insbesondere der Temperaturmessung. Weitere Kenngrößen, wie Druck, Temperatur, Leitfähigkeit, Strömungsgeschwindigkeit usw. können bei Bedarf gemessen werden.

Die mehrere Anzeige- und Bedienungselemente 32, 33 aufweisende Steuereinheit 31 wird dabei von einem auf der Grundplatte 6 stehenden und an dieser befestigten Ständer 34 getragen, der aus insgesamt 3 miteinander verbundenen Profilschienen 35, 36, 37 besteht. Dabei stehen zwei Profilschienen 35, 36 vertikal und im Abstand parallel zueinander fest auf der Grundplatte 6. Bei ihren freien Enden, jedoch gegen diese zurückversetzt, sind die Profilschienen 35, 36 durch die sich in horizontaler Richtung erstreckende Profilschiene 37 miteinander verbunden. Der so gebildete Ständer 34 trägt neben der Steuereinheit 31 lediglich die von den Sensoren 26, 27, 28, 29 kommenden Kabel sowie Kabel, die zu dem Elektromotor 19 und den Zwillingspumpen 24 führen.

Schließlich sind an der insoweit vormontierten Wärmeübergabestation 2 an dem Rohrkrümmer 14 der Kondensatkammer 8, der Meßkammer 22 und der Rücklaufleitung RL direkt anzeigende Manometer 38 mit Handabsperrventil vorgesehen. Darüberhinaus tragen die Rohrkrümmer 14, die Meßkammer 22, die Kondensatkammer 8 und die Rücklaufleitung RL direkt anzeigende Thermometer 39.

Die insoweit beschriebene Wärmeübergabestation 2 ist komplett auf der Grundplatte 6 vormontiert. Sie kann bei dem Apparatehersteller als kompakte Einheit vorgefertigt werden. Am Aufstellort sind lediglich die Dampfleitung 010, die Kondensatrückführungsleitung 012, die Vorlaufleitung VL, die Rücklaufleitung RL sowie eine elektrische Stromversorgung anzuschließen, womit die Wärmeübergabestation 2 betriebsbereit ist. Dies stellt nicht nur einen erheblichen Zeitgewinn bei der Installation der Wärmeübergabestation 2 dar, sondern erhöht auch deren Funktionssicherheit, indem Aufbaufehler weitgehend ausschließbar sind. Außerdem ergibt sich, indem die Kondensatkammer 8 und der Wärmetauscher 7 selbst als tragende Elemente ausgebildet sind, ein übersichtlicher und kompakter Aufbau.

Sensoren für Druck oder Temperatur, wie die Sensoren 26, 27, 28, 29, können an den zur Meßwerterfassung optimalen Stellen unabhängig von deren Erreichbarkeit bei der Montage vor Ort vorgesehen werden. Damit können Daten gewonnen werden, die besonders verläßliche Rückschlüsse auf den Systemzustand zulassen, womit die Gefahr von Fehlsteuerungen weitaus geringer wird. Insbesondere die Integration der Kondensatkammer und des Wärmetauschers zu einer Einheit führt zu einer genauen Messung der Parameter des Kondensats. Sie werden nahezu direkt am Entstehungsort gemessen, noch bevor die Temperatur, der Druck oder die Leitfähigkeit wesentlich verändert sind. Das ermöglicht, die Wärmeübergabestation präzise zu steuern oder zu regeln.

Die Wärmeübergabestation 2 als kompakte Einheit kann bei schrittweiser Inbetriebnahme des Fernwärmenetzes 1 kaum durch Steuerfehler beschädigt werden. Während bei schrittweise aufzubauenden Anlagen die Gefahr besteht, daß noch unfertige Wärmeübergabestationen versehentlich oder unkundig eingeschaltet und beschädigt werden, ist dies bei der Kompaktstation nicht der Fall. Wenn diese angeschlossen ist, funktioniert auch die Regel- und Steuereinrichtung.

Für ein Dampfwärmesystem 1 ist eine Wärmeübergabestation 2 vorgesehen, die als Kompakteinheit mit allen für den Betrieb erforderlichen Bausteinen vormontiert wird. Die Wärmeübergabestation 2 weist einen Wärmetauscher 7 auf, der von einer Kondensatkammer 8 gehalten ist, die ihrerseits auf einer Grundplatte 6 verankert ist. Die Kondensatkammer 8 trägt den Wärmetauscher 7. Alle weiteren Bausteine sind von der Kondensatkammer 8 und dem Wärmetauscher 7 gehalten. Der Wärmetauscher 7 trägt eingangsseitig ein fest vormontiertes, sich zu dem Wärmetauscher 7 hin erweiterndes Dampfrohr dessen Neigung auf 2,5% eingestellt ist. Ausgangsseitig ist unmittelbar an dem Wärmetauscher 7 eine Meßkammer 22 zur Bestimmung wenigstens der Temperatur des Heizmediums angeordnet.

## Patentansprüche

1. Wärmeübergabestation (2), die von kondensierendem Dampf abgegebene Wärme auf einen Wärmeträger überträgt,
mit einem Wärmetauscher (7), in dem der Dampf kondensiert und in dem dadurch der Wärmeträger erwärmt wird,
mit einer unterhalb des Wärmetauschers (7) angeordneten Kondensatkammer (8) zum Sammeln und Abführen des in dem Wärmetauscher (7) anfallenden Kondensats, die den Wärmetauscher (7) trägt und ohne weitere Stützmittel ortsfest an einem Aufstellort (6) verankert.

2. Wärmeübergabestation nach Anspruch 1, dadurch gekennzeichnet, daß der von der Kondensatkammer (8) ortsfest gehaltene Wärmetauscher (7) Leitungsanschlüsse (14, 16, VL, RL), Armaturen (15, 17, 18, 19, 23, 24) und Meßeinrichtungen (22, 26, 27, 28, 29, 38, 39) der Wärmeübergabestation (2) trägt und hält.

3. Wärmeübergabestation nach Anspruch 1, dadurch gekennzeichnet, daß der Wärmetauscher (7) und die Kondensatkammer jeweils die Form eines aufrecht stehenden Zylinders aufweisen.

4. Wärmeübergabestation nach Anspruch 1, dadurch gekennzeichnet, daß die Kondensatkammer (8) in den Wärmetauscher (7) integriert ist.

5. Wärmeübergabestation nach Anspruch 1, dadurch gekennzeichnet, daß die Kondensatkammer (8) starr mit dem Wärmetauscher (7) verbunden ist.

6. Wärmeübergabestation nach Anspruch 1, dadurch gekennzeichnet, daß die Kondensatkammer (8) mit dem Wärmetauscher (7) verschraubt oder verschweißt ist.

7. Wärmeübergabestation nach Anspruch 1, dadurch gekennzeichnet, daß die Kondensatkammer (8) an dem Wärmetauscher (7) in unmittelbarer Nähe zu dem Entstehungsort des Kondensats angeordnet ist.

8. Wärmeübergabestation nach Anspruch 3 und 4, dadurch gekennzeichnet, daß der Durchmesser der Kondensatkammer (8) im wesentlichen mit dem Durchmesser des Wärmetauschers (7) übereinstimmt.

9. Wärmeübergabestation nach Anspruch 1, dadurch gekennzeichnet, daß die Kondensatkammer (8) eine Meßkammer ist, die Sensoren (26) zur Erfassung des Kondensatzustandes aufweist.

10. Wärmeübergabestation nach Anspruch 1, dadurch gekennzeichnet, daß der Wärmetauscher (7) an seiner Oberseite eine Dampfzuleitung (14) mit einem Absperrschieber (15) trägt.

11. Wärmeübergabestation nach Anspruch 1, dadurch gekennzeichnet, daß die Kondensatkammer (8) eine ansonsten freitragende wegführende Kondensatleitung (16) trägt, in der wenigstens ein Absperrschieber (17, 18) vorgesehen und von der Kondensatleitung (16) gehalten ist.

12. Wärmeübergabestation nach Anspruch 1, dadurch gekennzeichnet, daß der Wärmetauscher (7) eine Vorlaufleitung (VL) mit einer Meßkammer (22) für den erwärmten Wärmeträger hält, an der wenigstens eine Absperrarmatur (23), Sensoren (27, 28) sowie Meß- und Überwachungseinrichtungen (38, 39) vorgesehen sind.

13. Wärmeübergabestation nach Anspruch 12, dadurch gekennzeichnet, daß die Meßkammer (22) für den erwärmten Wärmeträger unmittelbar an dem Wärmetauscher angeordnet ist.

14. Wärmeübergabestation nach Anspruch 1, dadurch gekennzeichnet, daß der Wärmetauscher (7) eine Rücklaufleitung (RL) hält, die mit einer elektrischen Pumpe (24) versehen ist.

15. Wärmeübergabestation nach Anspruch 1, dadurch gekennzeichnet, daß der Aufstellort eine transportable Grundplatte (6) ist, an der der Wärmetauscher (7) über die Kondensatkammer (8) verankert ist.

16. Wärmeübergabestation nach Anspruch 1, dadurch gekennzeichnet, daß die Grundplatte (6) eine im wesentlichen ebene rechteckige Platte ist, die bei ihren längeren Kanten nach unten abgewinkelt ist.

17. Wärmeübergabestation nach Anspruch 1, dadurch gekennzeichnet, daß an der Wärmeübergabestation (2) eine Steuer- und Überwachungseinrichtung (31) vorgesehen ist.

18. Wärmeübergabestation nach Anspruch 15 und 17, dadurch gekennzeichnet, daß die Steuer- und Überwachungseinrichtung (31) über einen Ständer (34) mit der Grundplatte verbunden ist.

19. Wärmeübergabestation nach Anspruch 15, dadurch gekennzeichnet, daß die Wärmeübergabestation (2) auf der Grundplatte (6) zu einer vormontierten transportablen Baugruppe zusammengefaßt ist.

20. Wärmeübergabestation nach Anspruch 19, dadurch gekennzeichnet, daß die vormontierte Baugruppe alle zur Funktion erforderlichen Komponenten soweit enthält, daß die Baugruppe bei Anschluß der erforderlichen Medien Dampf, Wärmeträger und Elektroenergie funktionsfähig ist.

21. Verfahren zum Herstellen einer Wärmeübergabestation (2),
die von kondensierendem Dampf abgegebene Wärme auf einen Wärmeträger überträgt,
die einen Wärmetauscher (7) aufweist, in dem der Dampf kondensiert und in dem dadurch der Wärmeträger erwärmt wird, und
die eine unterhalb des Wärmetauschers (7) angeordnete Kondensatkammer zum Sammeln und Abführen des in dem Wärmetauscher (7) anfallenden Kondensats aufweist, die den Wärmetauscher (7) trägt und ohne weitere Stützmittel ortsfest an einem Aufstellort (6) verankert,
wobei die Wärmeübergabestation (2) gesondert vormontiert wird und als vormontierte Kompakteinheit an den Aufstellort transportiert und in das zu errichtende Dampfwärmesystem eingebaut wird, wobei die vormontierte Wärmeübergabestation (2) beim Aufbau an einem gesonderten Ort mit allen für den Betrieb erforderlichen Komponenten versehen wird.

## Claims

1. Heat transfer station (2), which transfers heat emitted from condensed steam to a heat transfer medium, with a heat exchanger (7), in which the steam is condensed and in which the heat transfer medium is thus heated, with a condensate chamber (8) arranged below the heat exchanger (7) for collecting and discharging the condensate formed in the heat exchanger (7), said chamber supporting the heat exchanger (7) and anchoring it in a fixed manner on an erection site (6) without any further support means.

2. Heat transfer station according to Claim 1, characterised in that the heat exchanger (7) held in a fixed manner by the condensate chamber (8) bears and holds pipe connections (14, 16, VL, RL), fittings (15, 17, 18, 19, 23, 24) and measurement means (22, 26, 27, 28, 29, 38, 39) of the heat transfer station (2).

3. Heat transfer station according to Claim 1, characterised in that the heat exchanger (7) and the condensate chamber respectively have the form of an upright cylinder.

4. Heat transfer station according to Claim 1, characterised in that the condensate chamber (8) is integrated into the heat exchanger (7).

5. Heat transfer station according to Claim 1, characterised in that the condensate chamber (8) is rigidly connected to the heat exchanger (7).

6. Heat transfer station according to Claim 1, characterised in that the condensate chamber (8) is screwed or welded to the heat exchanger (7).

7. Heat transfer station according to Claim 1, characterised in that the condensate chamber (8) is arranged on the heat exchanger (7) in direct proximity to the formation site of the condensate.

8. Heat transfer station according to Claims 3 and 4, characterised in that the diameter of the condensate chamber (8) is essentially consistent with the diameter of the heat exchanger (7).

9. Heat transfer station according to Claim 1, characterised in that the condensate chamber (8) has a measurement chamber, which has sensors (26) for detection of the state of the condensate.

10. Heat transfer station according to Claim 1, characterised in that on its upper side, the heat exchanger (7) bears a steam feed pipe (14) with a stop valve (15).

11. Heat transfer station according to Claim 1, characterised in that the condensate chamber (8) bears an otherwise self-supporting discharging condensate pipe (16), in which at least one stop valve (17, 18) is provided and held by the condensate pipe (16).

12. Heat transfer station according to Claim 1, characterised in that the heat exchanger (7) holds a flow pipe (VL) with a measurement chamber (22) for the heated heat transfer medium, at which chamber at least one stop fitting (23), sensors (27, 28) and measuring and monitoring means (38, 39) are provided.

13. Heat transfer station according to Claim 12, characterised in that the measurement chamber (22) for the heated heat transfer medium is arranged directly on the heat exchanger.

14. Heat transfer station according to Claim 1, characterised in that the heat exchanger (7) holds a return pipe (RL) which is provided with an electric pump (24).

15. Heat transfer station according to Claim 1, characterised in that the erection site is a transportable base plate (6), on which the heat exchanger (7) is anchored above the condensate chamber (8).

16. Heat transfer station according to Claim 1, characterised in that the base plate (6) is an essentially plane rectangular plate, which is angled downwards at its longer edges.

17. Heat transfer station according to Claim 1, characterised in that a control and monitoring means (31) is provided on the heat transfer station (2).

18. Heat transfer station according to Claims 15 and 17, characterised in that the control and monitoring means (31) is connected to the base plate via a stand (34).

19. Heat transfer station according to Claim 15, characterised in that the heat transfer station (2) is assembled on the base plate (6) to form a pre-assembled transportable sub-assembly.

20. Heat transfer station according to Claim 19, characterised in that the pre-assembled sub-assembly contains all the components required for functioning such that the sub-assembly is operative on connection of the required media of steam, heat transfer medium and electric power.

21. Process for the production of a heat transfer station (2), which transfers heat emitted by condensing steam to a heat transfer medium,
which has a heat exchanger (7), in which the steam is condensed and in which the heat transfer medium is thus heated,
which has a condensate chamber arranged below the heat exchanger (7) for collecting and discharging the condensate formed in the heat exchanger (7), said chamber supporting the heat exchanger (7) and anchoring it in a fixed manner on an erection site (6) without any further support means,
wherein the heat transfer station (2) is pre-assembled separately and is transported to the erection site as a pre-assembled compact unit and is installed into the steam heating system to be erected, whereby the pre-assembled heat transfer station (2) is provided with all the components required for operation on installation at a separate site.

## Revendications

1. Sous-station de chauffage urbain (2) qui assure le transfert à un caloporteur de la chaleur résultant de la condensation de vapeur, comprenant
un échangeur thermique (7) dans lequel la vapeur est condensée et le caloporteur réchauffé,
une chambre à condensat (8) disposée au-dessous de l'échangeur de chaleur (7) pour collecter et évacuer le condensat produit dans l'échangeur de chaleur (7), laquelle chambre porte l'échangeur de chaleur (7) et assure sa fixation stationnaire sans autre moyen de support à l'emplacement de montage.

2. Sous-station de chauffage urbain selon la revendication 1, caractérisée par le fait que l'échangeur de chaleur (7) supporté de manière stationnaire par la chambre à condensat (8) comporte et supporte des tuyauteries de raccordement (14, 16, VL, RL), des vannes (15, 17, 18, 19, 23, 24) et des dispositifs de mesure (22, 26, 27, 28, 29, 38, 39) de la sous-station de chauffage urbain (2).

3. Sous-station de chauffage urbain selon la revendication 1, caractérisée par le fait que l'échangeur de chaleur (7) et la chambre à condensat ont chacun la forme d'un cylindre dressé verticalement.

4. Sous-station de chauffage urbain selon la revendication 1, caractérisée par le fait que la chambre à condensat (8) est intégrée dans l'échangeur de chaleur (7).

5. Sous-station de chauffage urbain selon la revendication 1, caractérisée par le fait que la chambre à condensat (8) est liée rigidement à l'échangeur de chaleur (7).

6. Sous-station de chauffage urbain selon la revendication 1, caractérisée par le fait que la chambre à condensat (8) est vissée ou soudée à l'échangeur de chaleur (7).

7. Sous-station de chauffage urbain selon la revendication 1, caractérisée par le fait que la chambre à condensat (8) est disposée sur l'échangeur de chaleur (7) dans le voisinage immédiat du point de production du condensat.

8. Sous-station de chauffage urbain selon les revendications 3 et 4, caractérisée par le fait que le diamètre de la chambre à condensat (8) correspond essentiellement à celui de l'échangeur de chaleur (7).

9. Sous-station de chauffage urbain selon la revendication 1, caractérisée par le fait que la chambre à condensat (8) est une chambre de mesure qui comporte des capteurs (26) pour détecter l'état du condensat.

10. Sous-station de chauffage urbain selon la revendication 1, caractérisée par le fait que la chambre à condensat (8), sur sa face supérieure, porte une conduite d'entrée de vapeur (14) munie d'une vanne d'arrêt (15).

11. Sous-station de chauffage urbain selon la revendication 1, caractérisée par le fait que la chambre à condensat (8) porte une conduite de condensat (16) en porte-à-faux, dans laquelle il est prévu au moins une vanne d'arrêt (17, 18) qui est supportée par la conduite de condensat (16).

12. Sous-station de chauffage urbain selon la revendication 1, caractérisée par le fait que 1 l'échangeur de chaleur (7) comporte une conduite d'entrée (VL) avec une chambre de mesure (22) pour le caloporteur réchauffé, dans laquelle il est prévu au moins une vanne d'arrêt (23), des capteurs (27, 28) ainsi que des dispositifs de mesure et de surveillance (38, 39).

13. Sous-station de chauffage urbain selon la revendication 12, caractérisée par le fait que la chambre de mesure (22) pour le caloporteur réchauffé est disposée directement sur l'échangeur de chaleur.

14. Sous-station de chauffage urbain selon la revendication 1, caractérisée par le fait que l'échangeur de chaleur (7) comporte une conduite de retour (RL) qui est pourvue d'une pompe électrique (24).

15. Sous-station de chauffage urbain selon la revendication 1, caractérisée par le fait que l'emplacement de montage est un socle (6) transportable auquel l'échangeur de chaleur (7) est fixé par l'intermédiaire de la chambre à condensat (8).

16. Sous-station de chauffage urbain selon la revendication 1, caractérisée par le fait que le socle (6) est une plaque essentiellement plane rectangulaire dont les côtés les plus longs sont pliés vers le bas.

17. Sous-station de chauffage urbain selon la revendication 1, caractérisée par le fait qu'un dispositif de commande et de surveillance (31) est prévu sur la sous-station de chauffage urbain (2).

18. Sous-station de chauffage urbain selon les revendications 15 et 17, caractérisée par le fait que le dispositif de commande et de surveillance (31) est relié au socle (6) par l'intermédiaire d'un support (34).

19. Sous-station de chauffage urbain selon la revendication 15, caractérisée par le fait que la sous-station (2) est rassemblée sur le socle (6) pour former un module préassemblé transportable.

20. Sous-station de chauffage urbain selon la revendication 19, caractérisée par le fait que le module préassemblé comprend tous les composants nécessaires au fonctionnement, de telle sorte que le module soit en état de fonctionner après raccordement des fluides nécessaires, vapeur, caloporteur et énergie électrique.

21. Procédé de fabrication d'une sous-station de chauffage urbain (2),
qui assure le transfert à un caloporteur la chaleur résultant de la condensation de vapeur,
qui comporte un échangeur de chaleur (7) dans lequel la vapeur est condensée et dans lequel le caloporteur est réchauffé et
qui comporte une chambre à condensat disposée au-dessous de l'échangeur de chaleur (7) pour collecter et évacuer le condensat produit dans l'échangeur de chaleur (7), laquelle chambre à condensat porte l'échangeur de chaleur (7) et assure sa fixation stationnaire, sans moyen de support supplémentaire, à un emplacement de montage (6),
la sous-station de chauffage urbain (2) étant préassemblée séparément et transportée sur le site d'installation en tant qu'unité compacte préassemblée et insérée dans le système de chauffage à réaliser, la sous-station de chauffage urbain (2) préassemblée, pour son assemblage en un lieu éloigné, étant pourvue de tous les composants nécessaires pour le fonctionnement.
